# Europäisches Patentamt

## European Patent Office

## Office européen des brevets

(19)

(11) Veröffentlichungsnummer: **0 012 179**
**B1**

(12) **EUROPÄISCHE PATENTSCHRIFT**

(45) Veröffentlichungstag der Patentschrift:
**06.02.85**

(51) Int. Cl.[4]: **G 02 B 6/24**

(21) Anmeldenummer: **79104037.1**

(22) Anmeldetag: **18.10.79**

(54) Justieren miteinander zu verbindender Enden zweier Lichtleitfasern.

(30) Priorität: **21.11.78 DE 2850430**

(43) Veröffentlichungstag der Anmeldung:
**25.06.80 Patentblatt 80/13**

(45) Bekanntmachung des Hinweises auf die Patenterteilung:
**06.02.85 Patentblatt 85/6**

(84) Benannte Vertragsstaaten:
**FR GB IT**

(56) Entgegenhaltungen:
**DE - A - 2 451 654**
**DE - A - 2 456 293**
**DE - A - 2 626 839**

**NACHRICHTENTECHNISCHE ZEITUNG, Band 31, Heft 2, 1978 M. RODE et al. "Ein Rückstreuverfahren zur Untersuchung von Lichtleitfasern" Seiten 144 bis 146**
**PROCEEDINGS OF THE IEEE, Band 66, Heft 4, 1978 M.K. BARNOSKI et al. "Measurements in Fiber Optics"**
**NACHRICHTEN ELEKTRONIK, Band 32, Heft 3, 1978 H. FRIEDENBERG et al. "Glasfaserkabel und Messverfahren" Seiten 85 bis 88**
**THE BELL SYSTEM TECHNICAL JOURNAL; Band 56, Heft 3, März 1977 S.D. PERSONICK "Photon Probe - An Optical Fiber Time-Domain Reflectometer" Seiten 355 bis 366**

(73) Patentinhaber: **Siemens Aktiengesellschaft, Berlin und München Wittelsbacherplatz 2, D-8000 München 2 (DE)**

(72) Erfinder: **Geckeler, Siegfried, Dr., Tucholskystrasse 12, D-8000 München 83 (DE)**
Erfinder: **Schicketanz, Dieter, Dr., Sintpertstrasse 13, D-8000 München 90 (DE)**

## Beschreibung

Die Erfindung betrifft ein Verfahren zum Justieren miteinander zu verbindender Enden zweier fluchtender Lichtleitfasern.

Bei der optischen Nachrichtenübertragung mittels Lichtleitfasern tritt häufig die Notwendigkeit auf, zwei Faserenden derart miteinander zu verbinden, dass das übertragende Lichtsignal möglichst ohne Dämpfung vom einen Faserende in das andere Faserende übertreten kann. Dies ist nur möglich, wenn die beiden Enden so justiert werden, dass ihre Stirnflächen aneinander stossen und in einer gemeinsamen Fluchtlinie liegen. In dieser Position kann dann z.B. durch Schweissen mittels eines Lichtbogens oder durch Kleben eine praktisch dämpfungsfreie Verbindung hergestellt werden. Dies ermöglicht es, Faserbrüche zu reparieren oder einzelne Fasern aneinander zu setzen.

Zum Justieren der Lichtleitfasern können Mikromanipulatoren oder andere Justierhilfen verwendet werden, wobei zur Kontrolle der genauen Position der Lichtleitfasern die Verbindungsstelle durch ein Mikroskop beobachtet werden kann. Dadurch wird jedoch die Bewegungsfreiheit des Arbeitspersonals stark herabgesetzt, ferner ist der Aufbau eines derartigen Justierplatzes z.B. an einer Bruchstelle im freien Gelände aufwendig. Vor allem aber kann die Güte (Dämpfungsfreiheit) der Verbindung erst nachträglich festgestellt werden.

Aus der «Nachrichtentechnischen Zeitung» (ntz), Bd. 31, Heft 2, 1978, Seiten 144–146 ist ein Verfahren zur Messung des rückgestreuten Lichtes in einer Faser und damit zur Fehlerortung von bereits verlegten Fasern bekannt. Neben der Ortung von Faserbrüchen können auch Störstellen in der Faser sowie Spleiss- und Steckverbindungen vermessen werden. Neben der Analyse einzelner Fasern kann die Rückstreumethode bei der Verkabelung von Fasern und der Kabelverlegung dazu angewendet werden, dass Faserbruchstellen geortet und die Verluste von bereits hergestellten Spleissen und lösbaren Steckverbindungen gemessen werden. Ort und Verluste der verschiedenen bereits hergestellten Spleisse können dabei aus einer Messkurve einfach entnommen werden.

Der Erfindung liegt die Aufgabe zugrunde, ein Verfahren anzugeben, bei dem die optimale Lage der Lichtleitfasern zueinander bereits festgestellt werden kann, bevor die zu verbindenden Faserenden verschweisst oder verklebt werden bzw. während des Verbindens oder Schweissens, solange die Verbindungsstelle noch verformbar ist. Dies ermöglicht eine rationelle Optimierung einer derartigen Verbindung («Spleiss»). Während in der Zentrale, von der ein derartiges Faserkabel ausgeht, durchaus eine umfangreichere stationäre Apparatur verwendet werden kann, soll der mobile Arbeitsplatz, der zum Spleissen auf der Nachrichtenstrecke nötig ist, möglichst einfach sein und eine grosse Bewegungsfreiheit des Personals zu lassen.

Diese Aufgabe wird erfindungsgemäss durch ein Verfahren nach dem Anspruch 1 gelöst. Der Messort am freien Ende der einen Faser kann z.B. in einer Zentral- oder Schaltstelle vorgesehen sein. Eine sprunghafte Intensitätsabnahme beim Übertritt des Lichtes vom einen ins andere der zu verbindenden Enden entspricht der Dämpfung des Spleisses. Ein erfindungsgemässes Verfahren ermöglicht, dass ein Spleiss relativ schnell und zuverlässig mit geringen Dämpfungsverlusten mittels Feldmontage hergestellt wird.

Nach dem Verfahren gemäss dem Anspruch 1 wird als am Ausgangspunkt der einen Lichtfaser, z.B. der Zentrale oder einer Schaltstelle, ein Lichtimpuls eingekoppelt. Beim Durchlaufen der Faser (Nachrichtenstrecke) wird ständig ein Teil des Lichtimpulses rückgestreut. Die Intensität des rückgestreuten Lichtes wird am selben Ausgangspunkt dieser Faser empfangen und aus dem zeitlichen Verlauf der Intensitätskurve kann auf die Dämpfung in jedem einzelnen Streckenbereich der Faser geschlossen werden. Eine Verbindungsstrecke (Spleiss) stellt eine Dämpfung dar, die sich als ein um so grösserer Sprung in der Intensitätskurve darstellt, je grösser die Spleissdämpfung ist. Werden nun vom Montagepersonal an der Verbindungsstelle die Enden gegeneinander verschoben, so verändert sich die Grösse des Intensitätssprunges. Wird dabei eine Stellung erreicht, bei der die Justierung optimal ist, so kann dies daran erkannt werden, dass der Intensitätssprung minimal (im günstigsten Fall Null) ist. Dieser Fall kann dem Montagepersonal signalisiert werden, das daraufhin die Enden in dieser optimalen gegenseitigen Lage verklebt oder verschweissen kann. Vorteilhafte Ausführungsbeispiele und Weiterbildungen der Erfindung ergeben sich aus den Unteransprüchen.

Anhand von drei Figuren und mehreren Ausführungsbeispielen wird das Wesen dieser Erfindung näher erläutert.

Es zeigen:

Fig. 1 den zeitlichen Verlauf der rückgestreuten Lichtintensität an dem einen freien Faserende,

Fig. 2 das Schema eines Reflexmessplatzes zum Einkoppeln des Lichtimpulses und Empfangen des rückgestreuten Lichtes,

Fig. 3 den schematischen Aufbau der elektronischen Einrichtungen an einem Reflexmessplatz bei einem bevorzugten Ausführungsbeispiel.

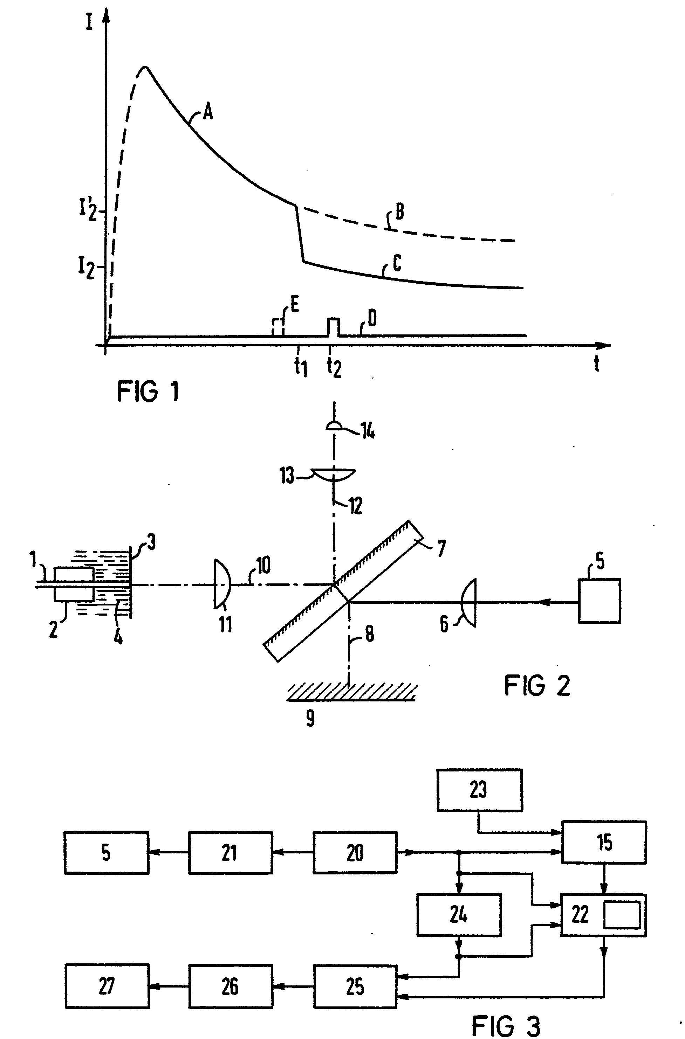

Wird in eine Lichtleitfaser ein Lichtimpuls eingestrahlt, der diese Faser mit der vom Fasermaterial bestimmten Lichtgeschwindigkeit $c$ durchläuft, so erreicht dieser Lichtimpuls nach einer Laufstrecke $x$ ein differentielles Längenelement der Lichtleitfaser in einer Laufzeit $t' = x/c$. Längs dieser Laufstrecke nimmt die Intensität des Lichtimpulses durch Extinktion exponentiell ab. Diese Extinktion wird teilweise durch Absorption und durch Streuung des Lichtes in den Fasermantel bewirkt, ein geringer Bruchteil wird jedoch auch in Richtung auf den Ausgangspunkt zurückgestreut. Dieses rückgestreute Licht erreicht nach einer weiteren Laufzeit $t' = x/c$ den Ausgangspunkt. Da sowohl der Lichtimpuls wie auch das rückgestreute Licht entlang der Laufstrecke x gedämpft wird, ergibt sich ein exponentieller zeitlicher Verlauf der Intensitätskurve des rückgestreuten Lichtes. In Fig. 1 stellt der Kurvenast A eine derartige Intensitätskurve dar, bei der zum Zeitpunkt $t = 0$ der Lichtimpuls eingekoppelt und zum Zeitpunkt $t = 2x/c$ die Intensität des am Ort x rückgestreuten Lichtes gemessen wird, wobei die Faser bis zum Ort $x_1$ (Laufzeit $t_1 = 2x_1/c$) keine Unregelmässigkeit, insbesondere keinen Spleiss, besitzt.

Am Ort $x_1$ liegt jedoch eine schlecht justierte Verbindungsstelle vor. Beim Durchlaufen dieser Dämpfungsstelle erleidet sowohl der Lichtimpuls wie das rückgestreute Licht eine Dämpfung. Zum Zeitpunkt $t_1'$ nimmt daher die Intensitätskurve des rückgestreuten Lichtes sprunghaft ab. An allen weiter entfernten Faserabschnitten ($x > x_1$) ist daher der Intensitätsverlauf des rückgestreuten Lichtes (Kurvenast C) gegenüber dem Intensitätsverlauf an einer ungestörten Faser (Fig. 1, gestrichelte Kurve B) gedämpft.

Bei einer Veränderung der Justierung der beiden miteinander zu verbindenden Faserenden verschiebt sich der Kurvenverlauf, wobei ein Anwachsen der Intensitätswerte eine Verbesserung der Justierung, eine Verringerung der Intensitätswerte eine Verschlechterung der Justierung bedeutet. Bei optimaler Justierung erreicht die Kurve ihre Höchstwerte.

Bei einer einfachen Variante des Verfahrens kann daher der Intensitätsverlauf erfasst und die Lage der zu verbindenden Enden verändert werden, bis der Intensitätsverlauf praktisch keinen Intensitätssprung aufweist (optimale Justierung). Dazu kann das rückgestreute Licht mit einem optoelektronischen Empfänger empfangen werden. Das der Intensität proportionale Ausgangssignal des Empfängers kann an einem Oszillographen beobachtet werden. Es ist zum Justieren nicht erforderlich, den Intensitätssprung selbst zu beobachten, vielmehr genügt es, die an Orten jenseits des Spleisses rückgestreute Intensität zu betrachten, z.B. den Kurvenast C oder ausgewählte Werte dieses Kurvenastes (z.B. den Intensitätswert $I_2$, der nach der Laufzeit $t_2 = 2x/c > t_1$ empfangen wird), und die Faser auf einen maximalen Wert für $I_2$ zu justieren, d.h. auf minimale Abweichung von dem Maximalwert $I'_2$, der als Grenzwert bei optimaler Justierung (Kurvenast B, Intensitätssprung Null) erhalten wird.

Besonders in den Fällen, bei denen der Intensitätssprung selbst nicht erkennbar ist, kann es vorteilhaft sein, auf diese Weise nachfolgende Teile der Intensitätskurve zum Justieren heranzuziehen. So überlagern z.B. bei Spleissen, die sehr nahe am Faseranfang liegen, die am Faseranfang auftretenden Reflexe den Intensitätssprung. Bei Veränderung der Justierung kann eine gegenseitige Lage der zu verbindenden Enden erreicht werden, bei der die nachfolgende Kurve maximal zu grösseren Intensitätswerten verschoben ist und durch jede weitere Veränderung der Justierung wieder kleinere Werte annimmt. Diese Extremalstellung stellt dann die optimale Justierung dar, bei der der (nicht sichtbare) Intensitätssprung praktisch Null ist.

In der Fig. 2 ist ein hierzu vorteilhafter Reflexmessplatz dargestellt, wie er bereits in der deutschen Offenlegungsschrift 2 451 654 beschrieben ist. Das freie Ende 1 einer Lichtleitfaser, die am anderen Ende mit dem Ende einer zweiten Lichtleitfaser verbunden werden soll, ist in einem Stekker 2 fixiert, vor dem eine vergütete Quarzplatte 3 angebracht ist, um das Steckerende zur Vermeidung von Reflexionen in eine Immersionsflüssigkeit 4 einzutauchen. Zum Einkoppeln des Lichtimpulses dient ein Impulslaser 5, dessen Laserimpuls durch eine erste Linse 6 aufgeweitet und auf einen Strahlteiler, z.B. einen schräg angestellten 50%ig reflektierenden Spiegel 7 gerichtet ist. Der Teil 8 des Laserimpulses wird an diesem Spiegel reflektiert und auf einer Absorptionsfläche 9 absorbiert. Der verbleibende Teil 10 des Laserimpulses wird von einer zweiten Linse 11 auf das freie Ende 1 der Faser fokussiert.

Der eingekoppelte Laserimpuls durchläuft die Faser 1, die Verbindungsstelle und die zweite Faser, wobei ein Teil des Lichtes zum freien Ende 1 zurückgestreut wird. Dieses Rückstreulicht gelangt wieder auf den Strahlteiler 7 und wird entsprechend dem Strahlengang 12 durch eine Fokussierungsoptik 13 auf einen lichtempfindlichen Empfänger 14, z.B. eine Fotodiode, gelenkt.

Zum Anregen des Impulslasers 5 (Fig. 2), z.B. eines GaAs-Lasers, wird ein Steuergerät 20 benutzt, das aus einem oder gegebenenfalls mehreren Impulsgeneratoren bestehen kann und dessen Impulse in einen Thyristor-Pulsator 21 auf die nötige Pumpleistung des Lasers verstärkt werden. Die Impulse des Steuergerätes 20 werden auch zum Triggern eines Oszillographen 22 verwendet. Auf den Signaleingang des Oszillographen 22 wird das Ausgangssignal des opto-elektronischen Empfängers 14, z.B. einer Lawinenfotodiode, gegeben. Diese Fotodiode wird von einem Netzgerät 23 gespeist, wobei das Triggersignal des Steuergerätes 20 dazu dient, die Spannungsversorgung der Lawinenfotodiode gleichzeitig mit dem Einkoppeln des Lichtimpulses einzuschalten. Dadurch steigt die Versorgungsspannung der Diode exponentiell an und erreicht erst nach etwa einer Mikrosekunde ihren Endwert, so dass unmittelbar nach dem Einkoppeln des Lichtimpulses die Verstärkung sehr klein ist und erst danach ansteigt. Dadurch ist die Diode anfangs unempfindlich und kann durch Reflexe, die beim Einstrahlen des Lichtimpulses in das freie Faserende entstehen, nicht übersteuert werden.

Bevorzugt wird nicht der gesamte Verlauf der Intensitätskurve betrachtet, sondern nur ein kleiner Ausschnitt, der durch die Rückstreuung an einem jenseits der Verbindungsstelle gelegenen Faserabschnitt entsteht. Zu diesem Zweck kann der Triggerimpuls des Oszillographen 22 in ein Verzögerungsglied 24 («Scan Delay») geleitet werden. Benutzt man einen Zweistrahl-Oszillographen, so kann der verzögerte Impuls des Verzögerungsgliedes 24 auf den zweiten Eingang des Oszillographen gegeben und dort beobachtet werden (Fig. 1, Kurve D). Das Ausgangssignal des optoelektronischen Empfängers 15, das im Oszillographen 22 verstärkt wurde, und dieser verzögerte Abtastimpuls können in ein Integrationsglied gegeben werden, das das während der Dauer des Abtastimpulses ankommende Empfängersignal aufintegriert, speichert, und ein entsprechendes Dauersignal abgibt. Eine derartige «Sample and Hold"-Schaltung kann z.B. aus einem Analogspeicher bestehen, dessen Eingang von dem Abtastimpuls zum Einschreiben des entsprechenden Intensitätswertes geöffnet wird und der bis zum Einlesen eines neuen Wertes ein Dauersignal abgibt. Dieses Dauersignal, z.B. eine Gleichspannung, wird nun in einen Signalumsetzer 26 gegeben, z.B. einen Spannungs-Frequenzumsetzer TDB 0555 der Firma Siemens AG, und wird dort in ein Signal, z.B. eine Tonfrequenz umgesetzt. Dieses Signal kann anschliessend in einem Anzeigegerät 27 angezeigt werden, um dem Arbeitspersonal an der Verbindungsstelle die Güte der Justierung anzuzeigen.

Wird z.B. als Signal eine Tonfrequenz erzeugt, deren Tonhöhe um so höher ist, je grösser die empfangene Intensität des rückgestreuten Lichtes zur Zeit des Abtastimpulses ist, so zeigt ein höherer Ton eine bessere Justierung an. Mit weiterer Verbesserung der Justierung nähert sich die Tonhöhe asymptotisch einem oberen Grenzwert, der dem Intensitätssprung Null entspricht. Ein Absinken der Tonhöhe zeigt stets einen grösseren Intensitätssprung, d.h. eine Verschlechterung der Justierung, an. Als Anzeigegerät kann ein Kopfhörer verwendet werden, dem die Tonfrequenz z.B. über Funk übermittelt wird.

Dabei ist es besonders vorteilhaft, dass das Montagepersonal auf der freien Kabelstrecke lediglich einen Kopfhörer zum Empfangen des Signals benötigt, während die anderen Einrichtungen am Faseranfang, z.B. der Schaltstelle des Kabelnetzes, ortsgebunden installiert werden können. Bei Verwendung eines Kopfhörers als Empfänger hat das Montagepersonal die Hände zum Justieren frei. Da das menschliche Gehör sehr feinfühlig auf Tonhöheschwankungen reagiert, ist mit dieser Methode eine optimale Justierung (niedrige Spleissdämpfung) zu erreichen. Für weniger tonhöhenempfindliches Personal kann die Tonhöhe auch mit einem Frequenzmesser in einen Zeigerausschlag umgesetzt werden.

Es kann zum Empfangen der Tonfrequenz auch eine Telefonverbindung des vorhandenen Telefonnetzes verwendet werden oder, falls zwei elektrisch leitfähige Adern in der optischen Nachrichtenstrecke vorhanden sind, ein Streckentelefon. Da optische Nachrichtenkabel fast immer eine Stahlader zur Stützung enthalten, kann über diese Stahlader auch eine Telefonverbindung mit der Erde als Rückleitung aufgebaut werden.

Eine andere Möglichkeit ist, die Lichtleitfaser selbst zur Übertragung des Signals zu verwenden. Zu diesem Zweck wird das Dauersignal vom Signalumsetzer in ein optisches Signal umgewandelt, das über die Lichtleitfaser übertragen und am zu verspleissenden Ende selbst empfangen werden kann. Ist die Schutzhülle der Lichtleitfaser ausreichend durchlässig, so genügt es zum Empfangen des Signals, mittels einer seitlichen Fotodiode das in der Nähe der Spleissstelle austretende Streulicht aufzufangen. Das Bedienungspersonal braucht demnach die Lage der zu verbindenden Enden lediglich auf maximale Tonhöhe zu justieren.

Man kann den Intensitätssprung auch auf andere Weise ermitteln. So kann z.B. mittels eines zweiten Abtastimpulses E (Fig. 1) ein kleiner Kurvenbereich der Intensitätskurve abgetastet werden, der vom Spleiss unmittelbar vor dem Übertritt in die Verbindungsstelle erzeugt wird. Die Differenz der beiden abgetasteten Intensitätswerte enthält dann die «normale» Dämpfung der ungestörten Faser, die vom Intensitätssprung überlagert ist. Diese Differenz ist also umso grösser, je grösser der Intensitätssprung ist und kann gemessen und in ein Signal, z.B. eine Tonfrequenz, umgesetzt werden. Ist der Intensitätssprung am Spleiss praktisch Null (optimale Justierung), so nimmt das Signal seinen kleinstmöglichen Wert an. Es muss daher in diesem Fall z.B. auf minimale Tonhöhe justiert werden. Natürlich kann anstelle eines akustischen oder optischen Signales auch ein elektrisches Signal erzeugt werden. Zur Signalanzeige kann auch ein Zeigerausschlag verwendet werden.

Die Beobachtung des Intensitätsverlaufes am Oszillographen bietet die Möglichkeit, z.B. bei einem Faserbruch aus der Laufzeit des Intensitätssprunges auf den Ort des Faserbruches zu schliessen. Im Allgemeinen kann aber auf die Verwendung eines Oszillographen verzichtet werden, indem das Ausgangssignal des Empfängers 14 und das verzögerte Abtastsignal direkt auf die «Sample and Hold»-Schaltung 25 gegeben wird. Insbesondere kann auch anstelle eines einzigen Lichtimpulses eine Impulsfolge eingekoppelt werden, wobei dann im Analogspeicher 25 der «Sample and Hold»-Schaltung jeweils mehrere Signale integriert, d.h. über mehrere Intensitätssprünge integriert wird. Dadurch kann das Signal-Rauschverhältnis verbessert werden. So kann z.B. anstelle des Scan Delay 24 ein Boxcar-Integrator verwendet werden. In diesem Fall ist die Intensitätskurve nicht sofort auf dem Bildschirm eines Oszillographen zu sehen, sondern wird langsam mit einem X–Y-Schreiber aufgezeichnet.

Darüber hinaus bietet das Verfahren auch die Möglichkeit, die Dämpfung des Spleisses direkt auszumessen. Hierzu wird auf die obengenannte Weise der Spannungsabfall mittels zweier Abtastimpulse ermittelt und mit einem dritten Abtastimpuls der Nullpunkt der Kurve nach Fig. 1 gemessen. In einem kleinen Rechner kann dann der Wert der Spleissdämpfung berechnet werden.

**Patentansprüche**

1. Verfahren zum Justieren miteinander unlösbar zu verbindender Enden zweier fluchtender Lichtleitfasern, dadurch gekennzeichnet,

dass am freien Ende der einen Faser an einem Messort ein Lichtimpuls eingekoppelt wird,

dass das beim Durchlaufen der zu verbindenden Enden rückgestreute Licht des Lichtimpulses am selben freien Ende empfangen wird,

dass die beim Übertritt des Lichtes vom einen ins andere der zu verbindenden Enden an dem Ort (Spleissort), an dem diese Enden unlösbar verbunden werden sollen, entstehende sprunghafte Intensitätsabnahme ermittelt wird, und dass die zu verbindenden Enden während des Verschweissens oder Verklebens, solange die Verbindungsstelle noch verformbar ist, derart justiert werden, dass die ermittelte sprunghafte Intensitätsabnahme möglichst gering ist, dass dabei ein Abschnitt des Intensitätsverlaufs des jenseits des Spleissortes rückgestreuten Lichtes abgetastet wird und

dass daraus ein der Intensitätsabnahme entsprechendes Signal erzeugt und vom Messort zum Spleissort übermittelt wird, und

dass die zu verbindenden Enden derart justiert werden, dass die Abweichung dieses Signals von einem dem Intensitätssprung Null entsprechenden Extremalwert möglichst gering wird.

2. Verfahren nach Anspruch 1, dadurch gekennzeichnet, dass zur Erzeugung des der Intensitätsabnahme entsprechenden Signals zusätzlich zur Abtastung eines Abschnittes des Intensitätsverlaufs des jenseits des Spleissortes rückgestreuten Lichtes ein Abschnitt des Intensitätsverlaufs des diesseits des Spleissortes rückgestreuten Lichtes abgetastet wird und dass dann die Differenz der beiden abgetasteten Intensitätswerte gebildet wird.

3. Verfahren nach Anspruch 1 oder 2, dadurch gekennzeichnet, dass am freien Ende als Signal eine Tonfrequenz erzeugt wird.

4. Verfahren nach Anspruch 1 oder 2, dadurch gekennzeichnet, dass am freien Ende ein elektrisches Signal erzeugt wird.

5. Verfahren nach Anspruch 1 oder 2, dadurch gekennzeichnet, dass am freien Ende die Intensitätsabnahme in ein Lichtsignal umgesetzt wird, und dass das Lichtsignal über eine Lichtleitfaser, insbesondere eine der zu verbindenden Lichtleitfasern, in die Nähe der Verbindungsstelle übermittelt, dort empfangen und zur Justierung verwendet wird.

6. Verfahren nach einem der Ansprüche 1 bis 5, dadurch gekennzeichnet, dass eine Lichtimpulsfolge eingekoppelt wird und dass zur Ermittlung der Intensitätsabnahme über die jeweils beim Übertritt eines Lichtimpulses vom einen ins andere der zu verbindenden Enden auftretenden Intensitätsabnahmen gemittelt wird.

## Claims

1. A process for adjusting the ends of two aligned fibre optical waveguides which are to be fixedly connected together, characterised in that at a measuring location a light pulse is coupled into the free end of one fibre,

that on passing to the ends that are to be connected backscattered light of the light pulse is returned to the same free end,

that the sudden reduction in intensity which occurs at the splicing location where the ends are to be fixedly connected to one another on passage from one to the other of the ends to be connected is established, and that during the welding or glueing operation the ends to be connected are adjusted whilst the connection point is still deformable in such manner that the reduction in intensity is as small as possible,

that for this purpose a component of the intensity variation of the light backscattered beyond the splicing location is sampled to produce a signal which corresponds to the reduction in intensity and transmitted from the measuring location to the splicing location, and that the connected ends adjusted in such manner that the deviation of this signal from the maximum value, which corresponds to no change in intensity, becomes as small as possible.

2. A process as claimed in Claim 1, characterised in that in order to produce the signal corresponding to the reduction in intensity, in addition to the sampling of a component of the intensity variation of the light backscattered beyond the splicing location, a section of the intensity variation of the light backscattered on this side of the splicing location is sampled and the difference of the two sampled intensity values is then formed.

3. A process as claimed in Claim 1 or 2, characterised in that a sound frequency is produced as a signal at the free end.

4. A process as claimed in Claim 1 or 2, characterised in that an electric signal is produced at the free end.

5. A process as claimed in Claim 1 or 2, characterised in that the reduction in intensity at the free end is converted into a light signal and that by means of a fibre optical waveguide, in particular one of the fibre optical waveguides to be connected, the light signal is transmitted into the vicinity of the connection point, received and used for the adjustment.

6. A process as claimed in one of Claims 1 to 5, characterised in that a light pulse sequence is input coupled and that in order to establish the reduction in intensity an average is taken by means of the reductions in intensity which occur when a light pulse passes from the one into the other one of the ends which are to be connected.

## Revendications

1. Procédé pour ajuster les extrémités, devant être reliées entre elles de façon non détachable, de deux fibres optiques alignées, caractérisé par le fait qu'on injecte par couplage une impulsion lumineuse dans l'extrémité libre d'une fibre en un emplacement de mesure, qu'on reçoit, sur la même extrémité libre, la lumière de l'impulsion lumineuse, qui fait l'objet d'une rétrodiffusion lors de la traversée des extrémités devant être réunies, qu'on détermine la diminution brusque d'intensité apparaissant lors du passage de la lumière de l'une à l'autre des extrémités devant être réunies au niveau de l'emplacement (point d'épissure), au niveau duquel ces extrémités doivent être réunies de façon non détachable, et que pendant le soudage ou le collage, tant que la zone de jonction est encore déformable, on ajuste les extrémités devant être réunies de telle manière que la diminution brusque d'intensité déterminée soit aussi faible que possible, qu'on explore une partie de la variation d'intensité de la lumière rétrodiffusée au-delà du point de jonction, qu'on détermine un signal correspondant à la diminution de l'intensité et qu'on le retransmet du lieu de mesure jusqu'au point de jonction et qu'on ajuste les extrémités devant être réunies, de manière que l'écart entre ce signal et une valeur extrême correspondant au saut d'intensité nul soit aussi faible que possible.

2. Procédé suivant la revendication 1, caractérisé par le fait que pour l'obtention du signal correspondant à la diminution de l'intensité, en plus de l'exploration d'une partie de la variation de l'intensité de la lumière rétrodiffusée de l'autre côté du point de jonction, on explore une partie de la variation d'intensité de la lumière rétrodiffusée en-deçà du point de jonction et on forme alors la différence des deux valeurs d'intensité explorées.

3. Procédé suivant la revendication 1 ou 2, caractérisé par le fait qu'une fréquence acoustique est produite en tant que signal au niveau de l'extrémité libre.

4. Procédé suivant la revendication 1 ou 2, caractérisé par le fait qu'un signal électrique est produit au niveau de l'extrémité libre.

5. Procédé suivant la revendication 1 ou 2, caractérisé par le fait qu'au niveau de l'extrémité libre, la diminution d'intensité est transformée en un signal lumineux et que le signal lumineux est retransmis par l'intermédiaire d'une fibre optique, notamment de l'une des fibres optiques devant être réunies, à proximité de la zone de jonction, est reçu à cet endroit et est utilisé pour l'ajustement.

6. Procédé suivant l'une des revendications 1 à 5, caractérisé par le fait qu'on injecte par couplage une suite d'impulsions lumineuses et que, pour la détermination de la diminution de l'intensité, on forme la moyenne des diminutions d'intensité apparaissant respectivement lors du passage d'une impulsion lumineuse de l'une à l'autre des extrémités devant être réunies.

0 012 179

FIG 1

FIG 2

FIG 3

7